# EUROPEAN PATENT SPECIFICATION

(11) **EP 2 222 955 B1**
(45) Date of publication and mention of the grant of the patent: **11.01.2017**
(21) Application number: 08846171.0
(22) Date of filing: 29.10.2008
(51) Int. Cl.: F03D 7/02

(54) **WIND TURBINE BLADE AND METHOD FOR CONTROLLING THE LOAD ON A BLADE**
WINDTURBINENSCHAUFEL UND VERFAHREN ZUR STEUERUNG DER LAST AUF EINER SCHAUFEL
AUBE D'ÉOLIENNE ET PROCÉDÉ PERMETTANT DE RÉGULER LA CHARGE S'EXERÇANT SUR UNE AUBE

(30) Priority: 29.10.2007 DK 200701545
(43) Date of publication of application: 01.09.2010
(73) Proprietor: Vestas Wind Systems A/S, 8200 Aarhus N (DK)
(72) Inventor: ABDALLAH, Imad, DK-8900 Randers (DK); ROMBLAD, Jonas, DK-8900 Randers C (DK); WESTERGAARD, Carsten, Hein, TX 77010 Houston (US); LIM, Chee Kang, SG-Singapore 528794 (SG)
(74) Representative: Inspicos P/S
(86) International application number: PCT/DK2008/000380
(87) International publication number: WO 2009/056136

(56) References cited:
- WO-A-2004/099608
- WO-A-2007/071249
- WO-A-2007/104306
- DE-A1- 10 021 850
- FR-A- 2 863 320
- US-A1- 2004 067 134

## Description

### Background of the invention

The present invention relates to a wind turbine blade comprising a blade body and lift-regulating means adapted for movement in relation to the blade body by an actuation means controlled by an actuation controller, wherein the actuation controller controls a setting of the lift-regulating means based on an input from a sensor.

Another aspect of the invention relates to a method for regulating the lift of a wind turbine blade and controlling the load on a blade.

Modem wind turbines have grown considerably in size over the last decades, and at present have blades with a length of up to 100 m, and even longer blades can be anticipated in the future. Wind turbine blades are typically arranged in sets of three on a hub to constitute a rotor. The rotor is in turn connected to a main shaft arranged in a nacelle on top of a tower. As an example a rotor having blades of 100 m sweeps a rotor area of more than 31,000 m².

With increasing size the loads on the structure, for example the blades, increase considerably. One reason is that the energy received by the wind turbine increases with the square of the increase in blade length. Further the wind speed will not be constant all over the rotor, and the blades will be subject to more variance of the wind with increased size of the blades. Local variance of the wind at different positions of the rotor area are due to wind shear, i.e. lower wind speed near the ground than higher up, turbulence, wind shade, tower shadow etc. All these factors increase fatigue loads and extreme loads on the wind turbine.

Over the years a lot of investigations have been made to improve aerodynamic properties of the blades and different approaches on regulation of wind turbines have been proposed. For example it is now standard to be able to regulate the pitch of the blades. There is, however, still room for improvement.

By enabling reduction of loads of the wind turbine, it is possible to significantly lower the cost of power production using such wind turbines. Controlling the loads of the wind turbine will render it possible to decrease the cost of components, as these components will have fewer restraints on the strength, because the components may be protected from overloading and fatigue. Controlling of loads of the wind turbine will moreover provide for even larger wind turbines than today, resulting in higher power output. Furthermore controlling of loads of the wind turbine will enable closer interspacing between wind turbines in wind turbine parks, which is of major importance to the economy of wind turbine parks.

Different attempts have been made to alleviate the loads on the blades, such as by having blades with variable geometry. For example WO 2004/088130 A1 discloses a wind turbine blade having a variable geometry. The blade comprises a deformable leading edge and/or trailing edge. The deformation is controlled by monitoring blade inflow measurements, flow pressures, strain gauges and accelerometers.

Another example can be seen in WO 2004/074681 A1, which relates to a method of controlling aerodynamic load of a wind turbine based on local blade flow measurement. The blades comprise a movable trailing edge flap.

WO 2004/099608 A1 upon which the pre-amble of claims 1 and 10 is based discloses a wind turbine blade with active flaps. The flaps can be adjusted by means of activating means and thus alter the aerodynamic properties of the blade. Strain gauges mounted on the inner face of the blade shell or a bracing interconnecting the inner faces of the blade shells measure the loads on the blades and are used to adjust the flaps.

These ideas have, however, not found way into commercial wind turbines. It is assumed that the high complexity of the above systems, and hence expected high price and lack of robustness of the systems, is a hindrance to commercial use of the above ideas.

An object of the invention is to provide a wind turbine blade with fast-responding lift-regulating means.

### The invention

According to the invention this object is obtained by a wind turbine blade according to claim 1 and a method according to claim 10. In the blade according to the invention the sensor is a force sensor adapted for sensing force from a wind flow acting on the lift-regulating means. By means of the invention it is achieved that the sensor senses the force from the wind flow acting directly on the lift-regulating means, not on the blade in general, which means that inertia effects are limited and hence response time lag is considerably reduced. Compared to sensors for local wind speed measurements, such as pitot-tubes or built-in pressure sensors in the blade, force sensors are very robust Moreover the price of the force sensors is comparatively low. Further the arrangement of the sensor at the lift-regulating means facilitates installation and maintenance, and may even enable retrofitting of lift-regulating means according to the invention on existing blades.

According to an embodiment the sensor is a strain or pressure gauge, which are a particularly robust and cheap kind of sensors.

According to an alternative embodiment, the sensor is a piezo-electric array. Such a piezo-electric array may provide more detailed information on the force, and hence a more precise regulation, which will further reduce the loads on the blades. A piezo-electric array may further double as both actuator means and sensor means at the same time.

The lift-regulating means according to the invention may be arranged at any suitable position of the wing, and it may take any suitable form. According to an embodiment, however, the lift-regulating means is a trailing edge flap. A trailing edge flap allows for considerable alleviation of the loads on a wind turbine blade, and is less prone to failure compared to a leading edge flap.

It should be understood that the flap may be an integral part of blade, and may even form the entire trailing edge portion of the blade from a root area to a position at or near the blade tip. According to an embodiment, however, the flap comprises a plurality of individually movable flap segments. Hereby adjustment can be precisely adapted for the momentary load situation at any part of the blade.

To provide a substantially continuous adjustment of the load of the blade from hub to tip, the flap segments may be arranged side-by-side in the length-wise direction of the blade.

Although some beneficial effect may be provided with lift-regulating means covering only a relatively small portion of the blade length, it is suggested that lift-regulating means are arranged along a substantial part of the length of the blade, such as more than quarter of the blade length. Hereby is achieved that a significant adjustment of the lift can be provided.

According to an embodiment the lift-regulating means is adapted for providing a substantially continuous shape change in the longitudinal direction of the blade. Hereby gradual changes can be provided, and the risk of noise generation may be significantly reduced. The continuous shape change may be provided by a plurality of flap segments covered by a common outer skin of a flexible material, such as rubber.

In an embodiment the actuation controller is adapted for receiving data relating to one or more of the following parameters: wind speed, wind shear, speed of wind flow locally in at least one position on one or more blades, blade vibrations, weather conditions such as density of the air, turbulence, rain and snow, power consumption of the actuation means, actual blade load, and blade load history.

By wind shear is to be understood the difference of the wind speed over the area swept by the rotor. It is e.g. often seen that the wind speed is higher at the top of the rotor plane than at the bottom due to the grounds and objects on the grounds resistance to the moving air.

By the term *"blade load history*" is to be understood that e.g. a condition monitoring system, a main wind turbine controller or other could - based on historic observations of the blade load - conclude that the loads on the blade would have to be reduced for the blade to last until the next maintenance call, for the blade to last a given period of time or other.

By providing the actuation controller with further data it is possible to regulate the loading of the blade more precisely for a given situation, as other parameters can be taken into account.

In an aspect of the invention the lift-regulating means is connected to the blade by means of at least one hinge allowing the lift-regulating means to move in relation to the blade and wherein the sensor is adapted to sense a torque acting on the lift-regulating means around the hinge.

Hinging the lift-regulating means on the blade body is advantageous in that the hinge is a simple and durable way of allowing the lift-regulating means to move in relation to the blade body.

Furthermore, it allows for a simple an accurate way of sensing the force from a wind flow acting on the lift-regulating means in that this can very precisely be measured as the difference in the torque acting on the lift-regulating means around the hinge.

Another embodiment relates to a wind turbine comprising a wind turbine blade as outlined above. A wind turbine fitted with a wind turbine blade according to the invention will be able to operate in higher winds, and hence exploit the wind energy better. Further the wind turbine will be subjected to less stress and strain, so the life expectancy will be longer, as will the mean time between failures, which is an important parameter for the economy of wind turbines, as maintenance is costly due to the often remote sites.

In a further embodiment of the wind turbine, the actuation controller of one blade is adapted for receiving input from an actuation controller of another blade of the wind turbine. Hereby it is possible to operate the lift-regulating means of a blade even if the sensor is faulty, as data from an actuation controller of another blade of the wind turbine can be used. Further data from different actuation controllers can be used for assessment of the data quality, so it can be detected whether a sensor is faulty. Another advantage is that the actuation controller can take into consideration the data of a blade in a "future" position, i.e. in a position in which the blade in question will come shortly later. Hereby local flow phenomena like tower shadow etc. can be taken into account in advance.

The present invention will provide significant advantages on any type of wind turbine, such as stall-regulated wind turbines. According to an embodiment, however, the wind turbine comprises a pitch control adapted for receiving input from an actuation controller of one or more of the blades. Hereby the pitch control can take the necessary action to pitch the blade if, for example, the actuation controller of the lift-regulating means indicates an excessive loading of the blade.

The lift of a wind turbine blade may be regulated by a method comprising the steps of
- monitoring a force from a wind flow acting on the lift-regulating means by means of at least one sensor,
- providing an output signal from the sensor in correspondence to the force, and
- controlling a setting of the lift-regulating means in relation to the blade body on a basis of the output signal from the sensor.

Hereby a particularly simple and robust method for regulating the lift of a wind turbine blade can be achieved. Inertia effects are limited and hence response time lag is considerably reduced. Compared to sensors for local wind speed measurements, such as pitot-tubes or built-in pressure sensors in the blade, such sensors regarding loading may be very robust. Moreover the price of the sensors is comparatively low. Further the arrangement of the sensor at the lift-regulating means facilitates more simple installation and maintenance, and may even enable retrofitting of lift-regulating means according to the invention on existing blades.

In an aspect of the invention the method further comprises the steps of
- delivering the output signal from the sensor to a actuation controller, and
- controlling a setting of the lift-regulating means in relation to the blade on the basis of an input from the actuation controller, wherein said input is established on the basis of the output signal from the force sensor.

Providing the sensor signal to an actuation controller which in turn controls a setting of the lift-regulating means is advantageous in that an actuation controller enables a more complex control of the setting of the lift-regulating means e.g. the setting of the lift-regulating means can be controlled on the basis of other parameters than the output signal from the sensor, the relationship between the sensor output and the setting of the lift-regulating means could be controlled in a non-linear fashion or other.

In an aspect of the invention the method further comprises the steps of
- providing a set-point signal to the actuation controller from a wind turbine main controller, and
- controlling the setting of the lift-regulating means directly or partly on a basis of a difference between the output signal from the sensor and the set-point signal.

This is advantageous in that it hereby is possible to control the setting of the lift-regulating means directly or partly on the basis of a superior load control strategy and thereby make the control of the lift-regulating means a part of a greater strategy to dampen oscillations, control different wind turbine loads or other. The wind turbine main controller could e.g. be the controller controlling the operation of the rotor including pitching of the blades, it could be an overall controller controlling the overall operation of the entire wind turbine or it could be any other kind of superior controller in the wind turbine or controlling the wind turbine from a remote location.

In an aspect of the invention the method further comprises the steps of
- delivering the output signal from the sensor to a wind turbine main controller, and
- controlling a setting of the lift-regulating means in relation to the blade on the basis of an input from the main controller, wherein said input is established on the basis of the output signal from the force sensor.

Making the wind turbine main controller control the settings of the lift-regulating means is advantageous in that no extra controllers would have to be installed in the wind turbine and in that it enables that the lift-regulating means in a simple way could be controlled on the basis of other parameters than the force from the wind acting on the lift-regulating means.

In an aspect of the invention the method further comprises the step of controlling a setting of a first lift-regulating means located on a first blade, on the basis of an input from a first actuation controller, wherein said input is additionally established on the basis of an output signal from an second actuation controller, wherein said second actuation controller controls a second lift-regulating means located on a further blade.

Controlling the settings of the lift-regulating means additionally on the basis of the output of an actuation controller in another blade is advantageous, in that a more uniform load of the wind turbine can be achieved and in that the experience of a first controller could be sheared with a following controller to enable that a given load situation was anticipated and thereby handled better.

In an aspect of the invention the blade comprises more than one lift-regulating means each controlled by an independent actuation controller and wherein the method further comprises the step of checking an overall consistency of at least two of the independent actuation controllers to ensure that the lift-regulating means are coordinating reactions.

Checking the overall consistency of at least two of the independent actuation controllers is advantageous in that it hereby, in a simple way, is possible to fail check the different controllers and lift-regulating means and in that it is possible to prevent one lift-regulating mean from malfunctioning if sudden local changes in the force sensed by the force sensor occurred e.g. caused by a local turbulence phenomenon, by local icing, by local blade surface irregularities, bird strikes or other.

Another aspect of the invention relates to a method for controlling the load on a wind turbine blade, said method comprising the steps of:
providing lift-regulating means adjustable by an actuator, providing a controller for controlling the actuator based on input from a sensor, and employing a control strategy for adjusting the lift-regulating means based on input from the sensor regarding loading of the lift-regulating means.

According to an embodiment, the sensor input relates to pressure distribution on the lift-regulating means. Hereby a very precise determination of the loading of the lift-regulating means can be achieved.

According to an alternative embodiment, the sensor input relates to power consumption of the actuator, such as by using a power transformer to measure the power consumption of the actuator for the lift-regulating means. Hereby a very robust determination of the loading of the lift-regulating means can be achieved.

According to another alternative embodiment, the sensor input relates to measured strain by a strain-gauge at the lift-regulating means. Hereby a very robust determination of the loading of the lift-regulating means can be achieved.

According to another alternative embodiment, the sensor input relates to measured load by a load cell at the lift-regulating means. Hereby a very robust determination of the loading of the lift-regulating means can be achieved.

### Figures

In the following an embodiment of the invention will be described in more detail with a view to the accompanying drawing, in which
Fig. 1 illustrates a common wind turbine,
Fig. 2 is a graph showing pressure distribution at different angles of attack,
Fig. 3 illustrates pressure distribution at different flap angles,
Fig. 4 illustrates lift values at different flap angles,
Fig. 5 is a rough sketch showing a prior art blade with flaps,
Fig. 6 is a rough sketch of a section of a blade showing the principle according to the invention,
Fig. 7 illustrates pressure forces as function of angle of attack and flap angle,
Fig. 8 is a schematic sectional view showing a detail of a trailing edge of an alternative embodiment of the blade according to the invention,
Fig. 9 is an isometric view of an embodiment of the blade according to the invention,
Fig. 10 illustrates an ideal wind turbine power curve and an embodiment of a real power curve,
Fig. 11 illustrates an embodiment of a control system for a wind turbine according to the invention,
Fig. 12 shows schematically lift vs. angle of attack for various flap angles,
Fig. 13 shows schematically flap hinge moment vs. angle of attack for various flap angles,
Fig. 14 illustrates a velocity contour plot of airfoil at 8° angle of attack and flap angle -20°,
Fig. 15 illustrates a velocity contour plot of airfoil at 8° angle of attack and flap angle +20°, and
Fig. 16 illustrates a pressure contour plot of airfoil at 18° angle of attack and flap angle -20°.

### Detailed description

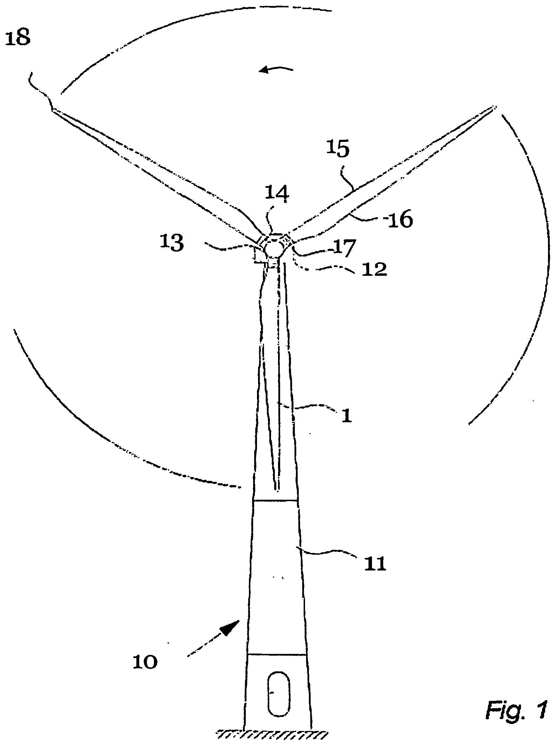

A common type of modem wind turbine 10 is shown in Fig. 1. The wind turbine 10 comprises a tower 11 with a nacelle 12 on top. The wind turbine 10 comprises a rotor made up of three blades 1 having a root 17 thereof mounted on a hub 13. The wind will actuate the blades 1 of the rotor to thereby make the rotor turn as indicated by the arrow. The hub 13 is connected to a shaft (not shown) in the nacelle 12, and normally the shaft is connected to a generator (not shown) for producing electrical power. The shaft may be connected to the generator through a gear. The blades 1 of the wind turbine 10 of Fig. 1 are pitch-regulated and can hence be turned about the longitudinal axis thereof. To effect this the blades 1 are connected to the hub 13 through a pitch bearing 14, and means are provided for pitching the blades, such as an electromotor, a hydraulic motor or mechanical means, e.g. a piston. Each blade 1 comprises a leading edge 15, a trailing edge 16, a root 17 and a tip 18.

Each blade 1 is subject to a force by the wind. The force on the blade 1 is the sum of local force contribution at local airfoils, i.e. cross sections of the blade 1. The force on the airfoil is a function of the angle of attack α onto the local airfoil section. The angle of attack α causes a certain pressure distribution (negative on the suction side and positive on the pressure side) producing a lift force. The pressure distribution is normally denoted (Cₚ) and lift force, being the integral of Cₚ, with (C_{L}).

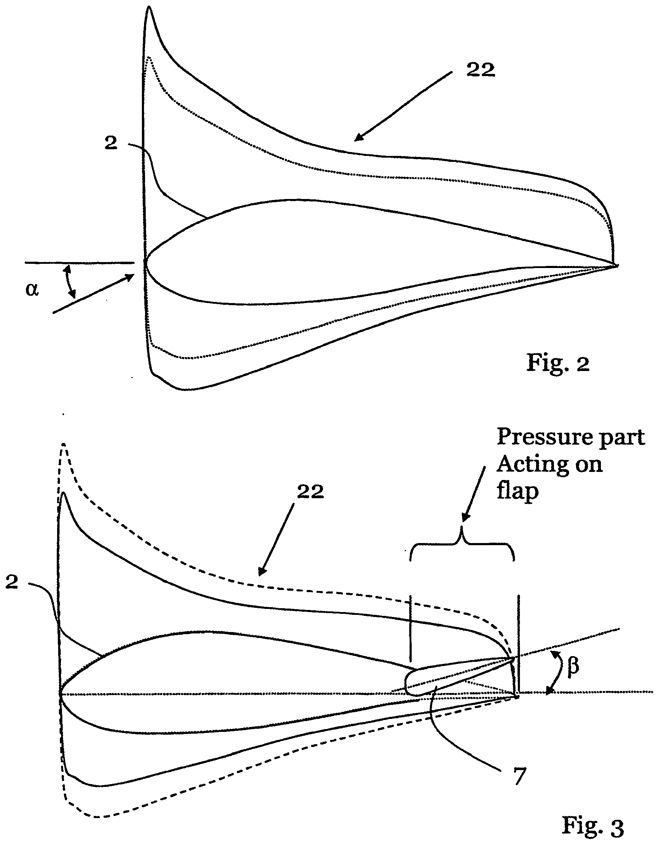

Figure 2 shows two pressure distributions at two different angles of attack α. The pressure distribution relating to the largest angle of attack α is shown in solid.

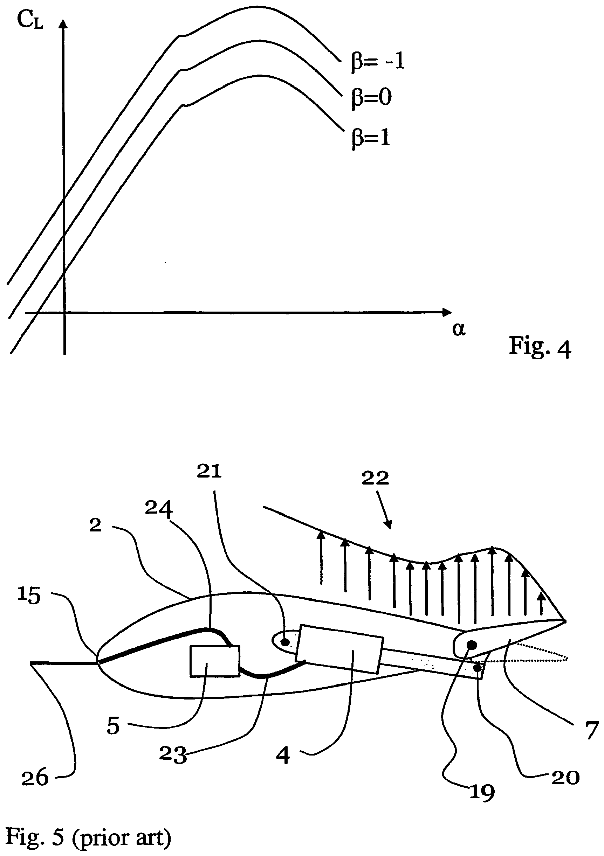

The pressure distribution and consequently the lift force can also be changed with the flap angle β. Figure 3 shows such an example. The pressure distribution relating to the flap angle β shown is drawn in solid line. In Figure 4, the corresponding set of lift values C_{L} is shown for different flap setting in the context of angle of attack α.

Fig. 5 is a rough sketch illustrating the principle of a prior art wind turbine blade 1 according to WO 2004/074681 A1. The wind turbine blade 1 comprises a blade body 2 and a movable trailing edge flap 7 adjusted by an actuator 4 controlled by a actuation controller 5 based on measurements from a flow sensor 26 at the leading edge 15 of the blade 1. It is the angle of attack α, detected with a 5-hole pitot tube and computed into the airfoil surface, which is used as the primary input for regulating the lift coefficient on the airfoil section. i.e. changing the loading on the entire turbine blade 1. The normal position of the flap 7 is shown with a dotted line, whereas an adjusted position of the flap 7 is shown with a solid line.

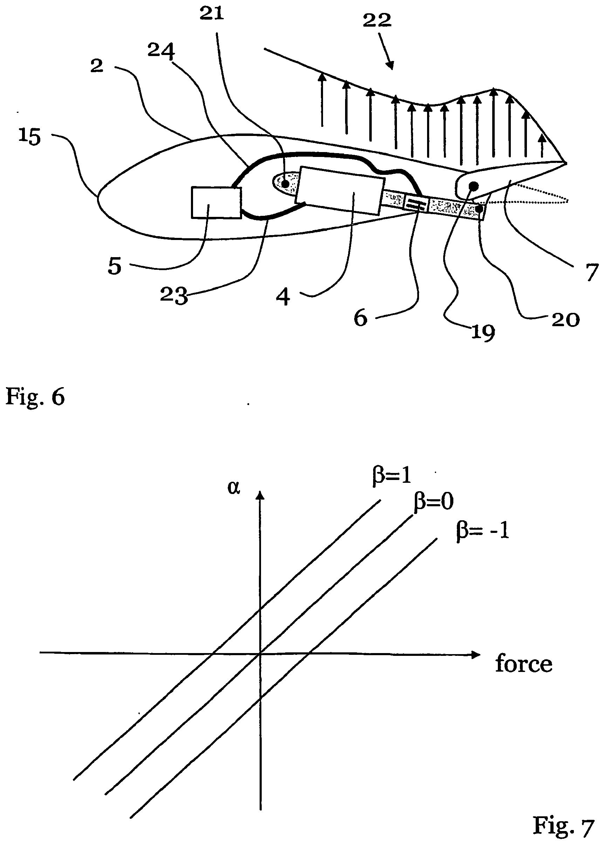

A wind turbine blade 1 according to the invention is illustrated in the rough sketch of Fig. 6. The blade 1 comprises a blade body 2 and lift-regulating means 3, which is here illustrated as a trailing edge flap 7. The position of the flap 7 is adjusted by an activation means, here in the form of a linear actuator 4. As in Fig. 2 the normal position of the flap 7 is shown with a dotted line, whereas an adjusted position of the flap 7 is shown with a solid line.

In the embodiment shown, the flap 7 is schematically illustrated with a flap hinge 19 to connect to the blade body 2. The flap 7 is further connected to the actuator at a flap connection point 20, and the actuator is in turn connected to the blade 1 at an anchor point 21. It will be clear to the skilled person that this is only an example and e.g. that different types of activation means could be provided, such as an electric linear actuator, a hydraulic linear actuator, a screw spindle etc. Further a piezo-electric array 9 could be used, as will be discussed in more detail below. The position of the flap 7 is controlled by a actuation controller 5 based on data from a force sensor 6 adapted for sensing force acting on the flap 7. In the illustrated embodiment the sensor 6 is a strain gauge on the actuator 4. The actuation controller 5 could include signal processing means, means for data processing and an actuator power control.

According to this embodiment a robust way to detect the angle of attack a is provided, namely by identifying that the pressure forces acting upon the flap surface is a function of the angle of attack α and the flap angle β. For small angle of attack α and small flap angles β this is linear functions, which is illustrated in figure 7. For larger angles this is more complex functions. Thus, knowing the flap angle β by adjusting the actuator and measuring the force upon the flap, which again is induced by the pressure distribution acting upon the flap, the angle of attack α can be deducted. Hereby forces acting on the flap can be mapped to the angle of attack α. The angle of attack α provides a particularly suitable parameter as input to a control strategy, since the angle also uniquely determines the local blade loading from aerodynamic forces. To provide the best possible picture of the load situation, all load data is collected, from each flap sensor 6 and from each blade 1. According to an over all load reduction strategy laid out in the actuation controller the flap position is re-adjusted in order to minimize the loading on the blade 1 and turbine structure while maintaining or even increase the power output.

It is important to notice, for application purpose as described here within it may not be strictly necessary to know the angle of attack α, it is only described here for illustration purposes.

Aerodynamic force loading 22 on the trailing edge flap 7 is shown schematically in Fig. 6. This loading 22 will be dependent on the position of the trailing edge flap 7 as discussed above. Hereby the loading of the blade in general may be adjusted to the particular flow field and possible transient flow situations, to thereby reduce the loading on the blade 1. Aerodynamic force loading 22 of the trailing edge flap 7 will be directly measured by the sensor 6 on the actuator 4. Data from the sensor 6 is fed to the actuation controller 5 through a sensor wire 24. In turn the actuation controller 5 evaluates the data from the sensor 6 and based on the evaluation sends a control signal to the actuator 4 through the actuator control wire 23 for possible adjustment of the position of the trailing edge flap 7.

As will be evident to the skilled person, the lift-regulating means 3 may be any type of flap and may be different from the movable trailing edge portion illustrated in Fig. 6 and discussed above. For example the lift-regulating means 3 may be a thin, surface type flap, which may be embedded in a recess of the blade 1.

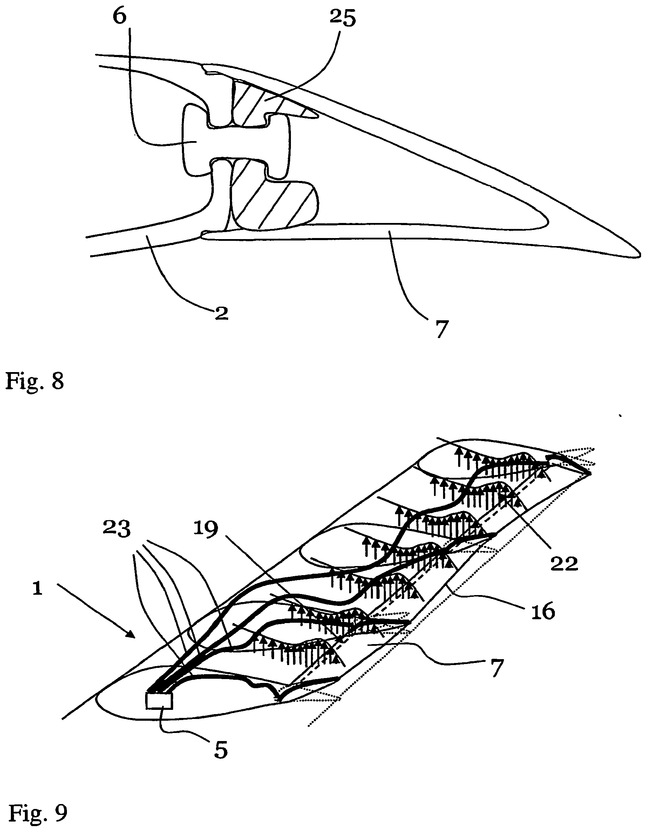

In Fig. 8, which is a schematic, cross-sectional view of a trailing edge portion of a blade 1, an alternative embodiment of the invention is shown. The blade 1 comprises a blade body 2 and a separate, deformable trailing edge flap 7. The flap 7 may be made of a flexible material to be deformable. In the illustrated embodiment the flap 7 is connected to a mounting block 25. Further a sensor 6 is positioned to bridge between the blade body 2 and the mounting block 25 to sense the relative movement of the trailing edge flap 7 with regard to the blade body 2. Again the sensor 6 is connected to a actuation controller for evaluation of the sensed data and possible adjustment of the flap 7.

An embodiment of the invention is seen in Fig. 9, which is a sketch in isometric view of a part of a wind turbine blade 1. The blade 1 comprises a trailing edge 16 with a trailing edge flap 7. The flap 7 is connected to the blade body by a flap hinge 19 to be movable up and down. In the illustration actuators (not shown) are provided at four positions in the longitudinal direction of the blade 1 for adjusting the position of the flap 7 at respective positions. The aerodynamic force loading 22 at the respective positions are measured by force sensors (not shown), and the data evaluated by a common actuation controller 5, which will send actuator control signals through actuator control wires 23 to adjust the individual actuators. As shown the trailing edge flap 7 may form a continuously varied curve in the longitudinal direction of the blade 1. This embodiment will have a relatively low noise generation, as all adjustments give rise to smooth changes of the shape of the trailing edge 16.

In an alternative embodiment, the sensors 6 are pressure sensors positioned on the trailing edge flap 7 of a wind turbine blade 1. Signals from the pressure sensors are distributed to the data collection means 28 through signal lines 27. The signal lines may be plastic tubes to communicate the pressure at the pressure sensors to the data collection means 28. The position of the pressure sensors at the flap 7 is relatively protected, and may allow for retrofitting on existing blades 1.

In an alternative embodiment, the sensors 6 are piezoelectric diaphragms positioned on the trailing edge flap 7 of a wind turbine blade 1 to measure dynamic pressure. Signals from the pressure sensors are distributed to the data collection means 28 through electric signal lines 27 to communicate the pressure at the piezoelectric diaphragms to the data collection means 28.

As mentioned above it is conceivable to employ a piezo-electric array 9. A piezo-electric array 9 could be used as actuator and/or force sensor. By means of piezo-electric arrays or actuators it is possible to provide materials which change shape when subjected to an electric current. An advantage of piezo-electric arrays 9 is that they are practically maintenance-free.

It is envisaged that with the wind turbine blade 1 according to the invention, it will be possible to significantly reduce fatigue and extreme loading. In particular it is expected that blade bending moments can be reduced by 25%, tower bending moments by 15% and yaw/tilt moment also by 15%. Further it is expected that the wind turbine blade 1 according to the invention will make it possible to operate wind turbines 10 in higher wind, as loading of the blade may be alleviated by adjustment of the lift-regulating means 3. This would significantly lower the cost of energy produced by the wind turbine 10, as the wind energy increases significantly with increasing wind speed.

The control strategy may be developed by means of aero-elastic calculations emulating wind field and the turbine structure or simply by means of practical experience converted into control schemes, say by means of fuzzy logics and neural networks. Forces acting on the flap 3 have been mapped to the angle of attack α. The angle of attack α provides the primary parameter as input to a control strategy, since the angle α also uniquely determines the local blade loading. All the load data is collected, from each flap sensor 6 and from each blade 1. According to an overall load reduction strategy laid out in the actuation controller 5 the flap position can be re-adjusted in order to minimize the loading on the blade 1 and turbine structure while maintaining or even increasing the power output.

As will be clear to the skilled person the above description presents only some of the possible embodiments and a variety of different alternatives and supplemental details are indeed possible. As an example pneumatics or hydraulics could be used for changing the shape of the blade, such as-the trailing edge 16, for example by introduction of hydraulic oil in elastic chambers of the blade 1 for deformation thereof.

Further the actuation controller 5 may be a central controller for all blades 1 and hence not positioned in individual blades 1. Communication with the actuation controller 5 could be performed using by wireless communication, whereby delicate wiring systems are avoided.

Although the illustrated embodiment relates to a wind turbine 10 having three blades 1, the skilled person will realize that any other number of blades 1 may be used, such as one, two or more than three.

Optimization may be used to in such a way to minimize the number of lift-regulating means 3 over the span of the blade 1, but still maximize the load alleviation potential. Hence the invention is not restricted to any particular number of lift-regulating means 3 or actuators 4.

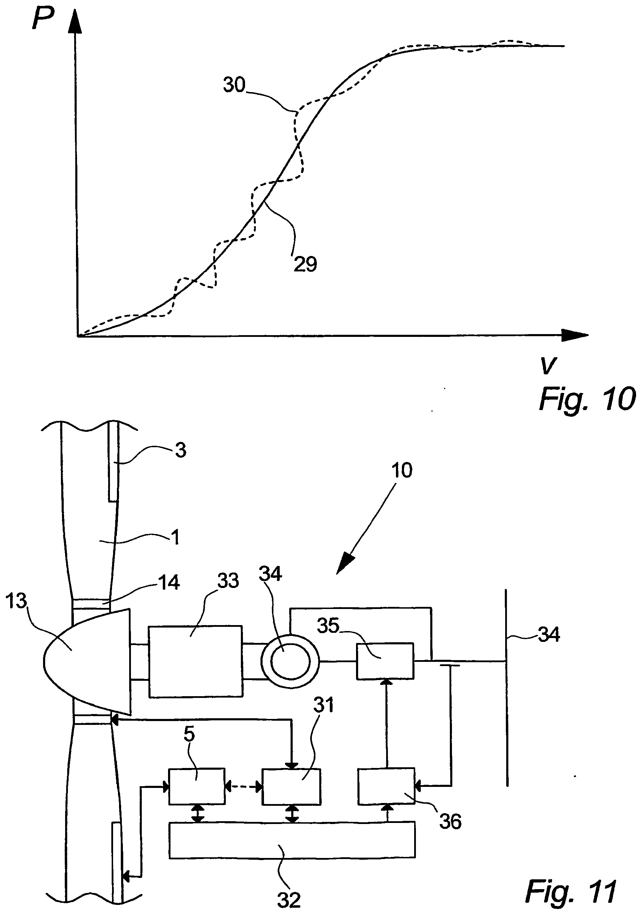

Fig. 10 illustrates an ideal wind turbine power curve 29 and an embodiment of an actual real power curve 30.

In the illustrated graph the axis of abscissa shows the wind speed v and the axis of ordinate shows the wind turbine output power P. The ideal wind turbine power curve 29 is the curve the wind turbine output power P ideally should follow at a given wind speed to maximise the efficiency of the wind turbine but due to fluctuations in the wind speed, turbulence, latency in turbine regulation system and other the actual power curve 30 will oscillate around the ideal curve 29.

It is evident that the quicker the wind turbine 10 can adapt to a new wind speed situation the smaller the fluctuations around the ideal curve 29 will become and the more efficient the wind turbine is. A traditional pitch control system will have to constantly measure the wind speed, power output, loads or other and subsequently rotate the entire wind turbine blade 1 to adapt to a new wind speed, power or load situation, whereas the lift-regulating means 3 according to the present invention more quickly will adapt the blade 1 to the new wind speed situation and thereby reduce the actual power curves 30 fluctuations around the ideal power curve 29, thus increasing the overall efficiency of the wind turbine 10.

Fig. 11 illustrates an embodiment of a control system for a wind turbine 10 according to the invention.

In this embodiment the wind turbine 10 comprises a main controller 32 which among other communicates with a power controller 36 for controlling the power output of the wind turbine 10 to a utility grid 34, a pitch controller 31 for controlling the pitch angle of the individual wind turbine blades 1 and one or more actuation controllers 5 for controlling the lift-regulating means 3 in response to the force of the wind acting on the flaps 3. The lift-regulating means 3 could e.g. additionally receive a set-point signal from the main controller 32 or from the pitch controller 31 whereby the setting of the lift-regulating means 3 is controlled directly or partly on a basis of the difference between the output signal from the force sensor 6 - measuring the force of the wind acting on the flaps 3 - and the set-point signal.

In another embodiment of the invention the lift-regulating means 3 could be controlled by another wind turbine main controller such as the pitch controller 31 or the main controller 32.

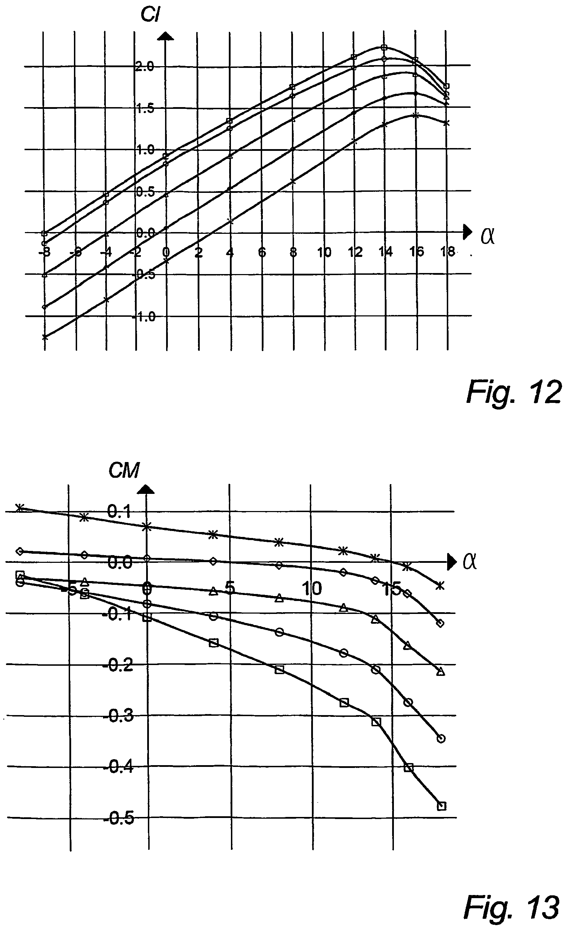

Fig. 12 shows schematically lift Cl vs. angle of attack α for various flap angles β and fig. 13 shows schematically flap hinge moment CM i.e. the force of the wind acting on the lift-regulating means 3 expressed as the resulting moment around a flap hinge 19 vs. angle of attack α for various flap angles β.

For both figs. 12 and 13 the x marked graph is with flaps at +20°, the ◊ marked graph is with flaps at +10°, the Δ marked graph is with flaps at +0°, the o marked graph is with flaps at -10° and the □ marked graph is with flaps at -20°.

All the measurements on which the graphs in figs. 12 and 13 are based was performed on a wind turbine blade 1 with a Risoe B1-18 profile and where the lift-regulating means 3 constitutes approximately 10% of the entire chord length of the blade 1. The chord length being the direct distance between the leading edge 15 and the trailing edge 16 of the blade 1 i.e. substantially the width of the blade 1.

In Figure 12, the corresponding set of lift coefficient values Cl is shown for different flap settings in the context of angle of attack α. For a negative flap angle β of the flap deflected downwards, the lift is increased. For a positive flap angle β of the flap deflected upwards, the lift is decreased. Values are obtained from Computational Fluid Dynamics (CFD) simulations of an airfoil at a flow condition of Reynolds number of 6 million.

In Figure 13, the corresponding set of flap hinge moment coefficient CM values is shown for different flap settings in the context of angle of attack α. This illustrates that the flap hinge moment CM is a function of the angle of attack α and the flap angle β. Thus, knowing the flap angle β by adjusting the actuator and measuring the flap hinge moment CM, which is induced by the pressure distribution acting upon the flap, the angle of attack α can be deduced. Hereby, flap hinge moment CM can be mapped to the angle of attack α.

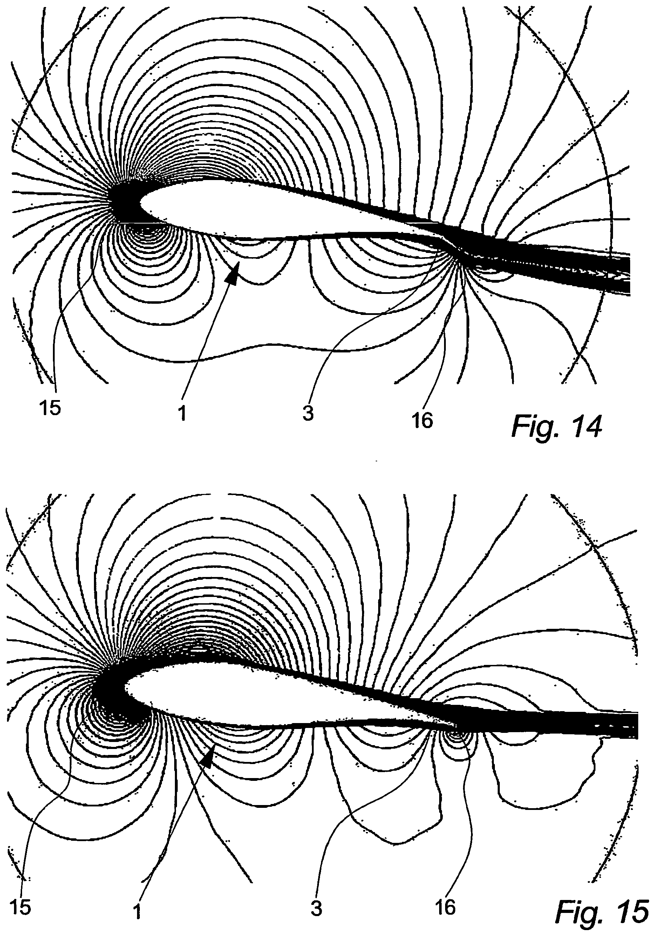

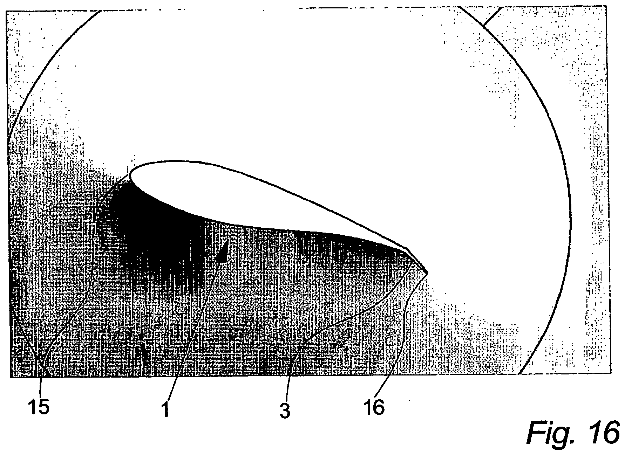

Fig. 14 illustrates a velocity contour plot of airfoil at 8° angle of attack α and flap angle -20°, fig. 15 illustrates a velocity contour plot of airfoil at 8° angle of attack a and flap angle +20°, and fig. 16 illustrates a pressure contour plot of airfoil at 18° angle of attack α and flap angle -20°.

These results were obtained from Computational Fluid Dynamics (CFD) simulations at a flow condition of Reynolds number of 6 million. The plots highlight the difference in the air flow around the airfoil due to the different flap angles β, especially near the trailing edge 16 of the airfoil. From these results, the lift coefficient Cl and flap hinge moment coefficient CM were calculated for different angles of attack α and flap settings β and plotted in the graphs in figure 12 and figure 13.

### List

- 1.: Wind turbine blade
- 2.: Blade body
- 3.: Lift-regulating means
- 4.: Actuator
- 5.: Actuation controller
- 6.: Sensor
- 7.: Trailing edge flap
- 8.: Linear actuator
- 9.: Piezo electric array
- 10.: Wind turbine
- 11.: Tower
- 12.: Nacelle
- 13.: Hub
- 14.: Pitch bearing
- 15.: Leading edge
- 16.: Trailing edge
- 17.: Root
- 18.: Tip
- 19.: Flap hinge
- 20.: Flap connection point
- 21.: Actuator anchor point
- 22.: Aerodynamic force loading
- 23.: Actuator control wire
- 24.: Sensor wire
- 25.: Mounting block
- 26.: Flow sensor
- 27.: Signal line
- 28.: Data collection means
- 29.: Ideal power curve
- 30.: Actual power curve
- 31.: Pitch controller
- 32.: Wind turbine main controller
- 33.: Gearbox
- 34.: Utility grid
- 35.: Electrical converter
- 36.: Power controller
- P.: Wind turbine power output
- v.: Wind speed
- Cl.: Lift coefficient
- α.: Angle of attack
- CM.: Flap hinge moment coefficient
- β.: Flap angle

## Claims

1. A wind turbine blade (1) comprising a blade body (2) and lift-regulating means (3,7) adapted for movement in relation to the blade body (2) by at least one actuation means (4) controlled by an actuation controller (5), wherein the actuation controller (5) controls a setting of the lift-regulating means based on an input from a sensor (6),
wherein the sensor (6) is a force sensor (6) adapted for sensing a force from a wind flow acting on the lift-regulating means (3,7),
**characterised in that** said sensor is arranged at the lift-regulating means or on the actuation means to sense the force from the wind acting directly on the lift-regulating means only.

2. A wind turbine blade (1) according to claim 1, wherein the lift-regulating means (3, 7) is a trailing edge flap (7).

3. A wind turbine blade (1) according to claim 2, wherein said flap (7) comprises a plurality of individually movable flap segments.

4. A wind turbine blade (1) according to any of the preceding claims, wherein the lift-regulating means (3, 7) is adapted for providing a substantially continuous shape change in the longitudinal direction of the blade (1).

5. A wind turbine blade (1) according to any of the preceding claims, wherein the actuation controller (5) is adapted for receiving data relating to one or more of the following parameters:
wind speed (v),
wind shear,
speed of wind flow locally in at least one position on one or more blades (1),
blade vibrations,
weather conditions such as density of the air, turbulence, rain and snow,
power consumption of the actuation means (4),
actual blade load, and
blade load history.

6. A wind turbine blade (1) according to any of the preceding claims, wherein the lift-regulating means (3, 7) is connected to the blade (1) by means of at least one hinge (19) allowing the lift-regulating means (3, 7) to move in relation to the blade (1) and wherein the sensor (6) is adapted to sense a torque acting on the lift-regulating means (3, 7) around the hinge (19).

7. A wind turbine blade (1) according to any of the preceding claims, wherein the sensor comprises a strain gauge, such as a strain gauge on the actuation means (4), a pressure gauge, a piezo-electric array or a power transformer to measure power consumption of the actuation means (4).

8. A wind turbine (10) comprising a wind turbine blade (1) according to any of the preceding claims, wherein the actuation controller (5) of one blade (1) is adapted for receiving input from a controller of another blade (1) of the wind turbine (10).

9. A wind turbine (10) according to claim 8, wherein the wind turbine (10) comprises a pitch controller (31) adapted for receiving input from an actuation controller (5) of one or more of the blades (1).

10. A method for controlling the load on a wind turbine blade, said method comprising the steps of:
- providing lift-regulating means adjustable by an actuator,
- providing a controller for controlling the actuator based on input from a sensor, and
employing a control strategy for adjusting the lift-regulating means based on input from the sensor,
**characterised in that**
said sensor is arranged at the lift-regulating means or on the actuation means to sense only the force from the wind acting directly on the lift-regulating means.

11. A method according to claim 10, wherein the method further comprises the steps of
• delivering the output signal from the sensor (6) to a actuation controller (5), and
• controlling a setting of the lift-regulating means (3, 7) in relation to the blade (1) on the basis of an input from the actuation controller (5), wherein said input is established on the basis of the output signal from the force sensor (6).

12. A method according to claim 10, wherein the method further comprises the steps of
• delivering the output signal from the sensor (6) to a wind turbine main controller, and
• controlling a setting of the lift-regulating means (3, 7) in relation to the blade (1) on the basis of an input from the main controller, wherein said input is established on the basis of the output signal from the force sensor (6).

13. A method according to any of claims 10 to 12, wherein the method further comprises the step of controlling a setting of a first lift-regulating means (3, 7) located on a first blade (1), on the basis of an input from a first actuation controller (5), wherein said input is additionally established on the basis of an output signal from an second actuation controller (5), wherein said second actuation controller (5) controls a second lift-regulating means (3, 7) located on a further blade (1).

14. A method according to any of claims 10 to 13, wherein the blade (1) comprises more than one lift-regulating means (3, 7) each controlled by an independent actuation controller (5) and wherein the method further comprises the step of checking an overall consistency of at least two of the independent actuation controllers (5) to ensure that the lift-regulating means (3, 7) are coordinating reactions.

## Patentansprüche

1. Windturbinenblatt (1) umfassend einen Blattkörper (2) und Auftriebsreguliermittel (3, 7) geeignet zur Bewegung relativ zu dem Blattkörper (2) mittels zumindest einem Betätigungsmittel (4), das von einer Betätigungssteuervorrichtung (5) gesteuert wird,
wobei die Betätigungssteuervorrichtung (5) eine Einstellung des Auftriebsreguliermittels basierend auf einer Eingabe von einem Sensor (6) steuert,
wobei der Sensor (6) ein Kraftsensor (6) ist, der zum Erfassen einer Kraft einer auf das Auftriebsreguliermittel (3, 7) wirkenden Windströmung geeignet ist,
**dadurch gekennzeichnet, dass**
der Sensor an dem Auftriebsreguliermittel oder an dem Betätigungsmittel angeordnet ist, zum Erfassen der Kraft des Windes, die direkt auf nur das Auftriebsreguliermittel wirkt.

2. Windturbinenblatt (1) nach Anspruch 1, wobei das Auftriebsreguliermittel (3, 7) eine Hinterkantenklappe (7) ist.

3. Windturbinenblatt (1) nach Anspruch 2, wobei die Klappe (7) eine Mehrzahl von individuell bewegbaren Klappensegmenten umfasst.

4. Windturbinenblatt (1) nach einem der vorhergehenden Ansprüche, wobei das Auftriebsreguliermittel (3, 7) zum Bereitstellen einer im Wesentlichen kontinuierlichen Formänderung in der Längsrichtung des Blattes (1) geeignet ist.

5. Windturbinenblatt (1) nach einem der vorhergehenden Ansprüche, wobei die Betätigungssteuervorrichtung (5) geeignet ist zum Empfangen von Daten bezüglich ein oder mehrerer der folgenden Parameter:
Windgeschwindigkeit (v),
Windscherung,
Geschwindigkeit der Windströmung lokal in zumindest einer Position an einem oder mehreren Blättern (1),
Blattvibrationen,
Wetterbedingungen, wie beispielsweise Luftdichte, Turbulenz, Regen und Schnee,
Stromverbrauch des Betätigungsmittels (4),
tastsächliche Blattbelastung, und
Blattbelastungsgeschichte.

6. Windturbinenblatt (1) nach einem der vorhergehenden Ansprüche, wobei das Auftriebsreguliermittel (3, 7) mit dem Blatt (1) verbunden ist mittels zumindest einem Scharnier (19), das dem Auftriebsreguliermittel (3, 7) erlaubt, sich bezüglich des Blattes (1) zu bewegen, und wobei der Sensor (6) geeignet ist zum Erfassen eines Drehmoments, das auf das Auftriebsreguliermittel (3, 7) um das Scharnier (19) herum einwirkt.

7. Windturbinenblatt (1) nach einem der vorhergehenden Ansprüche, wobei der Sensor eine Dehnungsmesseinrichtung, wie beispielsweise eine Dehnungsmesseinrichtung auf dem Betätigungsmittel (4), eine Druckmesseinrichtung, eine piezoelektrische Anordnung oder einen Leistungstransformator zum Messen des Stromverbrauchs des Betätigungsmittels (4) umfasst.

8. Windturbine (10) umfassend ein Windturbinenblatt (1) nach einem der vorhergehenden Ansprüche, wobei die Betätigungssteuervorrichtung (5) des Blattes (1) geeignet ist zum Empfangen einer Eingabe von einer Steuereinrichtung eines anderen Blattes (1) der Windturbine (10).

9. Windturbine (10) nach Anspruch 8, wobei die Windturbine (10) eine Anstellwinkelsteuervorrichtung (31) umfasst, die geeignet ist zum Empfangen einer Eingabe von einer Betätigungssteuervorrichtung (5) eines oder mehrerer der Blätter (1).

10. Verfahren zum Steuern der Last an einem Windturbinenblatt, das Verfahren umfassend die Schritte:
- Bereitstellen eines Auftriebsreguliermittels, das mittels einem Betätigungsmittel einstellbar ist,
- Bereitstellen einer Steuervorrichtung zum Steuern des Betätigungsmittels basierend auf Eingaben von einem Sensor, und
- Verwenden einer Steuerstrategie zum Einstellen des Auftriebsreguliermittels basierend auf Eingaben von dem Sensor, **dadurch gekennzeichnet, dass**
der Sensor an dem Auftriebsreguliermittel oder an dem Betätigungsmittel angeordnet ist, zum Erfassen von nur der Kraft des Windes, die direkt auf das Auftriebsreguliermittel wirkt.

11. Verfahren nach Anspruch 10, wobei das Verfahren weiterhin die Schritte umfasst
• Liefern eines Ausgangssignals von dem Sensor (6) zu der Betätigungssteuervorrichtung (5), und
• Steuern einer Einstellung des Auftriebsreguliermittels (3, 7) bezüglich des Blattes (1) auf der Basis einer Eingabe von der Betätigungssteuervorrichtung (5), wobei die Eingabe festgelegt wird auf der Basis des Ausgangssignals von dem Kraftsensor (6).

12. Verfahren nach Anspruch 10, wobei das Verfahren weiterhin die Schritte umfasst
• Liefern des Ausgangssignals von dem Sensor (6) an eine Hauptsteuervorrichtung der Windturbine, und
• Steuern einer Einstellung des Auftriebsreguliermittels (3, 7) bezüglich des Blattes (1) auf der Basis einer Eingabe von der Hauptsteuervorrichtung, wobei die Eingabe festgelegt wird auf der Basis des Ausgangssignals von dem Kraftsensor (6).

13. Verfahren nach einem der Ansprüche 10 bis 12, wobei das Verfahren weiterhin den Schritt Steuern einer Einstellung eines ersten Auftriebsreguliermittels (3, 7), angeordnet auf einem ersten Blatt (1), auf der Basis einer Eingabe von einer ersten Betätigungssteuervorrichtung (5) umfasst, wobei die Eingabe zusätzlich festgelegt wird auf der Basis eines Ausgangssignals einer zweiten Betätigungssteuervorrichtung (5), wobei die zweite Betätigungssteuervorrichtung (5) ein zweites Auftriebsreguliermittel (3, 7), das auf einem weiteren Blatt (1) angeordnet ist, steuert.

14. Verfahren nach einem der Ansprüche 10 bis 13, wobei das Blatt (1) mehr als ein Auftriebsreguliermittel (3, 7) umfasst, jedes gesteuert von einer unabhängigen Betätigungssteuervorrichtung (5), und wobei das Verfahren weiterhin den Schritt Überprüfen einer allgemeinen Kohärenz von zumindest zwei der unabhängigen Betätigungssteuervorrichtungen (5) umfasst, um zu gewährleisten, dass die Auftriebsreguliermittel (3, 7) Reaktionen koordinieren.

## Revendications

1. Pale d'éolienne (1) comprenant un corps de pale (2) et un moyen de régulation de portance (3, 7) adapté pour un déplacement par rapport au corps de pale (2) par au moins un moyen d'actionnement (4) commandé par un dispositif de commande d'actionnement (5), dans laquelle le dispositif de commande d'actionnement (5) commande un réglage du moyen de régulation de portance sur la base d'une entrée d'un capteur (6),
dans laquelle le capteur (6) est un capteur de force (6) adapté pour détecter une force d'un flux de vent agissant sur le moyen de régulation de portance (3, 7), **caractérisée en ce que** ledit capteur est agencé au niveau du moyen de régulation de portance ou sur le moyen d'actionnement pour détecter la force du vent agissant directement sur le moyen de régulation de portance uniquement.

2. Pale d'éolienne (1) selon la revendication 1, dans laquelle le moyen de régulation de portance (3, 7) est un volet de bord de fuite (7).

3. Pale d'éolienne (1) selon la revendication 2, dans laquelle ledit volet (7) comprend une pluralité de segments de volets individuellement mobiles.

4. Pale d'éolienne (1) selon l'une quelconque des revendications précédentes, dans laquelle le moyen de régulation de portance (3, 7) est adapté pour fournir un changement forme sensiblement continu dans la direction longitudinale de la pale (1).

5. Pale d'éolienne (1) selon l'une quelconque des revendications précédentes, dans laquelle le dispositif de commande d'actionnement (5) est adapté pour recevoir des données relatives à un ou plusieurs des paramètres suivants :
vitesse du vent (v),
cisaillement du vent,
vitesse du flux de vent localement dans au moins une position sur une ou
plusieurs pales (1),
vibrations de pale,
conditions météorologiques comme la densité de l'air, la turbulence, la pluie et la neige,
consommation de puissance du moyen d'actionnement (4),
charge de pale actuelle, et
historique de charge de pale.

6. Pale d'éolienne (1) selon l'une quelconque des revendications précédentes, dans laquelle le moyen de régulation de portance (3, 7) est relié à la pale (1) au moyen d'au moins une charnière (19) permettant au moyen de régulation de portance (3, 7) de se déplacer par rapport à la pale (1) et dans laquelle le capteur (6) est adapté pour détecter un couple agissant sur le moyen de régulation de portance (3, 7) autour de la charnière (19).

7. Pale d'éolienne (1) selon l'une quelconque des revendications précédentes, dans laquelle le capteur comprend une jauge d'effort, comme une jauge d'effort sur le moyen d'actionnement (4), une jauge de pression, un réseau piézoélectrique ou un transformateur de puissance pour mesurer la consommation de puissance du moyen d'actionnement (4).

8. Éolienne (10) comprenant une pale d'éolienne (1) selon l'une quelconque des revendications précédentes, dans laquelle le dispositif de commande d'actionnement (5) d'une pale (1) est adapté pour recevoir une entrée d'un dispositif de commande de l'autre pale (1) de l'éolienne (10).

9. Éolienne (10) selon la revendication 8, dans laquelle l'éolienne (10) comprend un dispositif de commande de calage (31) adapté pour recevoir une entrée d'un dispositif de commande d'actionnement (5) d'une ou plusieurs des pales (1).

10. Procédé de commande de la charge sur une pale d'éolienne, ledit procédé comprenant les étapes de :
- fourniture d'un moyen de régulation de portance réglable par un actionneur,
- fourniture d'un dispositif de commande pour commander l'actionneur sur la base d'une entrée d'un capteur, et
utilisation d'une stratégie de commande pour régler le moyen de régulation de portance sur la base d'une entrée du capteur,
**caractérisé en ce que**
ledit capteur est agencé au niveau du moyen de régulation de portance ou sur le moyen d'actionnement pour détecter uniquement la force du vent agissant directement sur le moyen de régulation de portance.

11. Procédé selon la revendication 10, dans lequel le procédé comprend en outre les étapes de :
- distribution du signal de sortie du capteur (6) à un dispositif de commande d'actionnement (5), et
- commande d'un réglage du moyen de régulation de portance (3, 7) par rapport à la pale (1) sur la base d'une entrée du dispositif de commande d'actionnement (5), dans lequel ladite entrée est établie sur la base du signal de sortie du capteur de force (6).

12. Procédé selon la revendication 10, dans lequel le procédé comprend en outre les étapes de :
- distribution du signal de sortie du capteur (6) à un dispositif de commande principal d'éolienne, et
- commande d'un réglage du moyen de régulation de portance (3, 7) par rapport à la pale (1) sur la base d'une entrée du dispositif de commande principal, dans lequel l'entrée est établie sur la base du signal de sortie du capteur de force (6).

13. Procédé selon l'une quelconque des revendications 10 à 12, dans lequel le procédé comprend en outre l'étape de commande d'un réglage d'un premier moyen de régulation de portance (3, 7) situé sur une première pale (1), sur la base d'une entrée d'un premier dispositif de commande d'actionnement (5), dans lequel ladite entrée est établie en plus sur la base d'un signal de sortie d'un deuxième dispositif de commande d'actionnement (5), dans lequel ledit deuxième dispositif de commande d'actionnement (5) commande un deuxième moyen de régulation de portance (3, 7) situé sur une autre pale (1).

14. Procédé selon l'une quelconque des revendications 10 à 13, dans lequel la pale (1) comprend plus d'un moyen de régulation de portance (3, 7), chacun étant commandé par un dispositif de commande d'actionnement (5) indépendant et dans lequel le procédé comprend en outre l'étape de vérification d'une cohérence globale d'au moins deux des dispositifs de commande d'actionnement (5) indépendants pour s'assurer que les moyens de régulation de portance (3, 7) coordonnent les réactions.
